# EUROPEAN PATENT APPLICATION

(11) **EP 4 685 864 A1**
(43) Date of publication of application: **28.01.2026**
(21) Application number: 25184998.0
(22) Date of filing: 24.06.2025
(51) Int. Cl.: H01M 4/134, H01M 4/36, H01M 4/48, H01M 4/587, H01M 4/62, H01M 10/0525, H01M 10/0569, H01M 4/02

(54) **NEGATIVE ELECTRODE MATERIAL, PREPARATION METHOD THEREOF, AND ELECTROCHEMICAL APPARATUS**

(30) Priority: 27.06.2024 CN 202410850475
(71) Applicant: Ningde Amperex Technology Ltd., Ningde City, Fujian Province 352100 (CN)
(72) Inventor: HUANG, Guoliang, Ningde City, Fujian Province, China, 352100 (CN)
(74) Representative: Icosa

(57) **Abstract**

A negative electrode material includes: a core, where the core includes silicon-based particles; a first layer containing carbon, where the first layer is on an outer side of the core; a second layer containing a first conductive material and an organic lithium salt, where the second layer is on an outer side of the first layer; and a third layer containing a second conductive material and a polymer, where the third layer is on an outer side of the second layer, thereby alleviating volume swelling of the electrochemical apparatus after cycling and improving cycling performance of the electrochemical apparatus.

## Description

### TECHNICAL FIELD

This application relates to the field of electrochemical energy storage, and in particular, to a negative electrode material, a preparation method thereof, and an electrochemical apparatus.

### BACKGROUND

Due to advantages such as high efficiency and stable charge/discharge platform, graphite is the most widely used negative electrode material. However, a low capacity per gram hinders further application of graphite. Compared with graphite, elemental silicon has a higher theoretical specific capacity, a suitable working voltage, and other advantages, and is considered an ideal negative electrode material that can replace graphite.

However, a swelling rate of lithium-intercalated silicon can reach 400%. A silicon-based negative electrode material repeatedly swells and contracts during cycling may lead to destruction and growth of SEI films and fracture of silicon-based negative electrode particles. This results in severe electrode swelling and rapid capacity decay, affecting a thickness and cycling performance of lithium-ion batteries and limiting large-scale application of the silicon negative electrode material in lithium-ion batteries.

### SUMMARY

This application is intended to provide a negative electrode material, a preparation method thereof, and an electrochemical apparatus, to improve cycling apparatus of the electrochemical apparatus. Specific technical solutions are as follows.

A first aspect of this application provides a negative electrode material, including: a core, where the core includes silicon-based particles; a first layer, where the first layer is on an outer side of the core; a second layer, where the second layer is on an outer side of the first layer; and a third layer, where the third layer is on an outer side of the second layer; where the first layer contains carbon; the second layer contains a first conductive material and an organic lithium salt; and the third layer contains a second conductive material and a polymer.

In an embodiment of this application, the silicon-based particles include at least of silicon-carbon particles or silicon-oxide particles.

In an embodiment of this application, the organic lithium salt includes a lithium polyacrylate salt.

In an embodiment of this application, the polymer includes polyurethane.

In an embodiment of this application, the first conductive material and the second conductive material are each independently selected from at least one of single-walled carbon nanotubes (SWCNT), multi-walled carbon nanotubes (MWCNT), or conductive carbon black.

In an embodiment of this application, the lithium polyacrylate salt includes at least one of lithium polyacrylate or lithium poly(acrylamide-co-acrylic acid).

In an embodiment of this application, based on a mass of the negative electrode material, a mass percentage of silicon element is 40% to 50%.

In an embodiment of this application, the negative electrode material satisfies at least one of the following: (1) Dᵥ50 of the negative electrode material is 6 µm to 10 µm; (2) Dᵥ90 of the negative electrode material is less than or equal to 30 µm; (3) based on a mass of the negative electrode material, a mass percentage of the carbon in the first layer is 1% to 5%; (4) based on the mass of the negative electrode material, a mass percentage of the organic lithium salt is 0.9% to 9%; (5) based on the mass of the negative electrode material, a mass percentage of the polymer is 0.9% to 9%; (6) based on the mass of the negative electrode material, a mass percentage of the first conductive material is 0.1% to 1%; or (7) based on the mass of the negative electrode material, a mass percentage of the second conductive material is 0.1% to 1%.

In an embodiment of this application, a mass ratio of the first conductive material to the organic lithium salt is 1:9 to 2:9, and a mass ratio of the second conductive material to the polymer is 1:9 to 2:9.

A second aspect of this application provides a preparation method of the negative electrode material of the first aspect of this application. The method includes: providing silicon-based particles; performing carbon-coating on the silicon-based particles, to obtain a first intermediate; dispersing the first intermediate in water, to obtain a first dispersion; dispersing an organic lithium salt and a first conductive material in water, to obtain a second dispersion; mixing and stirring the first dispersion and the second dispersion to uniformity, to obtain a second intermediate through spray drying; dispersing the second intermediate in water to obtain a third dispersion; dispersing a polymer and a second conductive material in water, to obtain a fourth dispersion; and mixing and stirring the third dispersion and the fourth dispersion to uniformity, to obtain the negative electrode material through spray drying. The coating may be partial coating or complete coating.

In an embodiment of this application, the carbon-coating is to place the silicon-based particles in a fluidized bed, and introduce a carbon source gas at a temperature of 500°C to 650°C for reaction for 2 h to 3 h, to obtain the first intermediate, where the carbon source gas includes at least one of acetylene, methane, or propene.

A third aspect of this application provides an electrochemical apparatus, including a positive electrode plate, a separator, an electrolyte, and a negative electrode plate; the negative electrode including a negative electrode active material layer; where the negative electrode active material layer includes the negative electrode material according to the first aspect of this application.

In an embodiment of this application, the electrolyte includes an additive, where the additive includes at least one of difluoroethylene carbonate or fluoroethylene carbonate, and based on a mass of the electrolyte, a mass percentage of the additive is 0.5% to 10%.

In an embodiment of this application, based on the mass of the electrolyte, the mass percentage of the additive is 2% to 7%.

A fourth aspect of this application provides an electric device, including the electrochemical apparatus according to the third aspect of this application.

This application has the following beneficial effects.

In this application, the silicon-based particles are coated by three layers, improving cycling performance of the electrochemical apparatus. The introduction of the first carbon coating layer can alleviate gas production caused by direct contact of the silicon-based particles with water during stirring; the introduction of the second layer can reduce reactions between the electrolyte and the silicon-based particles, improving constituents of an SEI film, and improving the cycling performance of the electrochemical apparatus; the introduction of the third layer can reduce a specific surface area of the silicon-based particles, alleviating volume swelling of the silicon-based particles, improving first-cycle charge/discharge efficiency of the negative electrode material, and lowering a thickness swelling rate of the electrochemical apparatus. Synergy of the three coating layers can alleviate the volume swelling of the silicon-based particles, reduce reactions between the electrolyte and the silicon-based particles, and improve the constituents of the SEI, thereby improving the cycling performance of the electrochemical apparatus and alleviating swelling of the electrochemical apparatus.

### BRIEF DESCRIPTION OF DRAWINGS

To describe the technical solutions in some embodiments of this application or in the prior art more clearly, the following briefly describes the accompanying drawings for describing some embodiments or the prior art. It is clear that the accompanying drawings in the following description show merely some embodiments of this application, and persons of ordinary skill in the art may still derive other embodiments from these accompanying drawings without creative efforts.
FIG. 1 is a schematic structural diagram of a negative electrode material prepared according to Example 1 of this application;
FIG. 2 is a diagram of comparison between cycling performance at 25°C of lithium-ion batteries respectively assembled with negative electrode materials in Example 1-1 and Comparative examples 1 to 3;
FIG. 3 is a diagram of comparison between cycling performance at 45°C of lithium-ion batteries respectively assembled with negative electrode materials in Example 1-1 and Comparative examples 1 to 3;
FIG. 4 is a diagram of comparison between swelling rates at 25°C of lithium-ion batteries respectively assembled with negative electrode materials in Example 1-1 and Comparative examples 1 to 3; and
FIG. 5 is a diagram of comparison between swelling rates at 45°C of lithium-ion batteries respectively assembled with negative electrode materials in Example 1-1 and Comparative examples 1 to 3.

### DETAILED DESCRIPTION

The following clearly and completely describes the technical solutions in some embodiments of this application. It is clear that the described embodiments are only some but not all of these embodiments of this application. All other embodiments obtained by persons skilled in the art based on this application shall fall within the protection scope of this application.

It should be noted that, in the specific embodiments of this application, an example in which a lithium-ion battery is used as an electrochemical apparatus is used to illustrate this application. However, the electrochemical apparatus of this application is not limited to the lithium-ion battery.

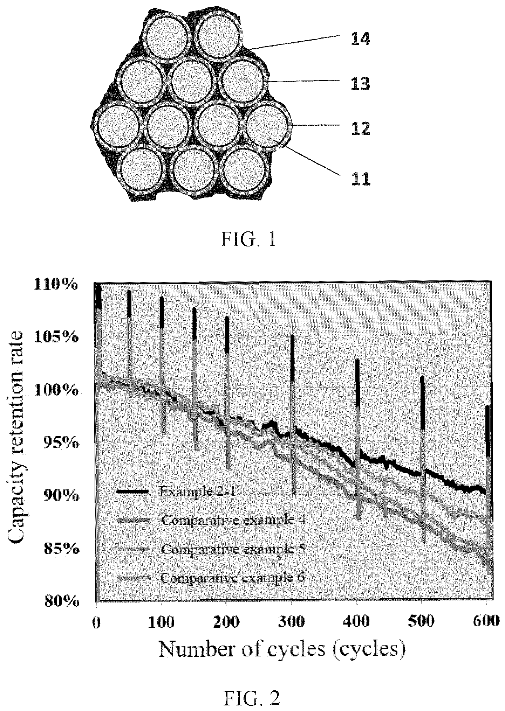

A first aspect of this application provides a negative electrode material, including: a core, where the core includes silicon-based particles; a first layer, where the first layer is on an outer side of the core; a second layer, where the second layer is on an outer side of the first layer; and a third layer, where the third layer is on an outer side of the second layer; where the first layer contains carbon; the second layer contains a first conductive material and an organic lithium salt; and the third layer contains a second conductive material and a polymer. In this application, the first layer is on the whole outer side or a part of the outer side of the core, the second layer is on the whole outer side or a part of the outer side of the first layer, and the third layer is on the whole outer side or a part of the outer side of the second layer. Specifically, a schematic structural diagram of the negative electrode material is shown in FIG. 1. From the inside to the outside, a core 11, a first layer 12, a second layer 13, and a third layer 14 are sequentially arranged. In an embodiment of this application, a miscibility layer may be formed between the core and the first layer. In another embodiment of this application, a miscibility layer may be formed between the first layer and the second layer. In still another embodiment of this application, a miscibility layer may be formed between the second layer and the third layer. The foregoing miscibility layers are not the first layer, second layer, or third layer described in this application.

Without wishing to be bound by any theory, the inventor of this application has found that the introduction of the carbon-containing first layer can alleviate gas production caused by direct contact of silicon-based particles with water during stirring; the introduction of the second layer can reduce reactions between an electrolyte and the silicon-based particles, improving constituents of an SEI film, and improving cycling performance of the lithium-ion battery; the introduction of the third layer can reduce a specific surface area of the silicon-based particles, alleviating volume swelling of the silicon-based particles, improving first-cycle charge/discharge efficiency of the negative electrode material, and lowering a thickness swelling rate of the lithium-ion battery. Synergy of the three coating layers can alleviate the volume swelling of the silicon-based particles, reduce reactions between the electrolyte and the silicon-based particles, and improve the constituents of the SEI, thereby improving the cycling performance of the lithium-ion battery and lowering the swelling rate of the lithium-ion battery.

In an embodiment of this application, the silicon-based particles include at least one of silicon-carbon particles or silicon-oxide particles.

In an embodiment of this application, the organic lithium salt includes a lithium polyacrylate salt.

In an embodiment of this application, the polymer includes polyurethane.

In an embodiment of this application, the first conductive material and the second conductive material are each independently selected from at least one of single-walled carbon nanotubes, multi-walled carbon nanotubes, or conductive carbon black.

Because the silicon-based particles are selected from the materials within the foregoing range, the negative electrode can have a high capacity, thus allowing for use of the negative electrode in the lithium-ion battery and providing the lithium-ion battery with a high energy density. Because polyurethane having good adhesion is selected as the polymer, a stable coating layer can be formed on the outer side of the core, and a second intermediate can be bonded to form the negative electrode material, alleviating the volume swelling of the negative electrode, lowering the thickness swelling rate of the lithium-ion battery, and reducing a specific surface area of the negative electrode material. Because the first conductive material and the second conductive material are selected from the foregoing range, the negative electrode material has good conductivity.

In an embodiment of this application, the lithium polyacrylate salt includes at least one of lithium polyacrylate or lithium poly(acrylamide-co-acrylic acid). Because the lithium polyacrylate salt is selected from the materials within the foregoing range, the direct contact between the electrolyte and active silicon can be reduced, and the constituents of the SEI can be altered, thereby improving the cycling performance of the lithium-ion battery.

In an embodiment of this application, the silicon-based particles satisfy at least one of the following: (1) the specific surface area of the silicon-based particles is 0.5 m²/g to 10 m²/g; (2) a particle size Dᵥ50 of the silicon-based particles is 1.5 µm to 2.5 µm; or (3) a particle size Dᵥ90 of the silicon-based particles is less than or equal to 10 µm. A particle classification technology is not particularly limited in this application, as long as the objectives of this application can be achieved. The particle classification technology may be any known classification method in the field, such as jet classification and cyclone classification. In this application, Dᵥ50 is a particle size of a material where the cumulative distribution by volume reaches 50% as counted from the small particle size side; and Dᵥ90 is a particle size of a material where the cumulative distribution by volume reaches 90% as counted from the small particle size side.

The specific surface area of the silicon-based particles may be 0.5 m²/g, 1 m²/g, 2 m²/g, 3 m²/g, 4 m²/g, 5 m²/g, 6 m²/g, 7 m²/g, 8 m²/g, 9 m²/g, or 10 m²/g, or fall in a range defined by any two of these values. A shape of the silicon-based particles may be spherical, near-spherical, plate, or block. Without wishing to be bound by any theory, the inventor of this application has found that when the specific surface area of the silicon-based particles is 0.5 m²/g to 10 m²/g, the reactivity between the silicon-based particles and water during stirring can be reduced, and the three layers on the outer side of the silicon-based particles can subsequently exhibit good coating performance.

The particle size Dᵥ50 of the silicon-based particles may be 1.5 µm, 1.6 µm, 1.7 µm, 1.8 µm, 1.9 µm, 2 µm, 2.1 µm, 2.2 µm, 2.3 µm, 2.4 µm, or 2.5 µm, or fall in a range defined by any two of these values. Without wishing to be bound by any theory, the inventor of this application has found that when the particle size Dᵥ50 of the silicon-based particles is 1.5 µm to 2.5 µm, a diffusion path of Li⁺ can be shortened, ion conductivity of the negative electrode material can be improved, and the volume swelling of the silicon-based particles can be alleviated.

The particle size Dᵥ90 of the silicon-based particles may be 3 µm, 4 µm, 5 µm, 6 µm, 7 µm, 8 µm, 9 µm, or 10 µm, or fall in a range defined by any two of these values. Without wishing to be bound by any theory, the inventor of this application has found that when the particle size Dᵥ90 of the silicon-based particles being less than or equal to 10 µm is conducive to controlling the particle size of the negative electrode material during coating can be conveniently controlled, improving transport of Li⁺, thereby improving the cycling performance and swelling resistance of the lithium-ion battery.

In an embodiment of this application, based on a mass of the negative electrode material, a mass percentage of the silicon element is 40% to 50%. For example, the mass percentage of the silicon element may be 40%, 41%, 42%, 43%, 44%, 45%, 46%, 47%, 48%, 49%, or 50%, or fall in a range defined by any two of these values. Without wishing to be bound by any theory, the inventor of this application has found that when the mass percentage of the silicon element is 40% to 50%, the negative electrode material has a higher reversible capacity and first-cycle charge/discharge efficiency; and when the material is applied to the lithium-ion battery, the battery exhibits good cycling performance, and therefore the material helps improve the energy density and cycling performance of the lithium-ion battery.

In an embodiment of this application, the particle size Dᵥ50 of the negative electrode material is 6 µm to10 µm. For example, the particle size Dᵥ50 of the negative electrode material may be 6 µm, 6.5 µm, 7 µm, 7.5 µm, 8 µm, 8.5 µm, 9 µm, 9.5 µm, or 10 µm, or fall in a range defined by any two of these values. Without wishing to be bound by any theory, the inventor of this application has found that adjusting the particle size Dᵥ50 of the negative electrode material to 6 µm to 10 µm helps shorten the diffusion path of Li⁺, improve Li⁺ ion conductivity, and improve the first-cycle charge/discharge efficiency of the negative electrode material. Further, defects of increased electrolyte consumption and a low compacted density of the material can also be alleviated, and the risks of low ion conductivity and poor rate performance caused by the large particle size can be reduced.

In an embodiment of this application, the particle size Dᵥ90 of the negative electrode material is less than or equal to 30 µm. For example, the particle size Dᵥ90 of the negative electrode material may be 12 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm, or fall in a range defined by any two of these values. Without wishing to be bound by any theory, the inventor of this application has found that when the particle size Dᵥ90 of the negative electrode material is less than or equal to 30 µm, dispersion uniformity of a slurry in the negative electrode material for preparing the negative electrode material can be improved, and Li⁺ transport can be improved, thereby improving the cycling performance and swelling resistance of the lithium-ion battery.

In an embodiment of this application, based on a mass of the negative electrode material, a mass percentage of the carbon in the first layer is 1% to 5%. For example, the mass percentage of the carbon in the first layer may be 1%, 1.5%, 2%, 2.5%, 3%, 4%, 4.5%, or 5%, or fall in a range defined by any two of these values. When the mass percentage of the carbon in the first layer is within the above range, the contact between the active silicon in the silicon-based particles and the air or solution can be effectively reduced, protecting the active silicon. In this way, the negative electrode material has a high specific capacity and stability, thereby improving the cycling stability and capacity of the lithium-ion battery.

In an embodiment of this application, based on the mass of the negative electrode material, a mass percentage of the organic lithium salt is 0.9% to 9%. For example, the mass percentage of the organic lithium salt may be 0.9%, 1%, 2%, 3%, 4%, 5%, 6%, 7%, 8%, or 9%, or fall in a range defined by any two of these values. When the mass percentage of the organic lithium salt is within the above range, the direct contact between the electrolyte and the active silicon can be reduced, and the constituents of the SEI can be altered, thereby improving the cycling performance of the lithium-ion battery.

In an embodiment of this application, based on the mass of the negative electrode material, the mass percentage of the polymer is 0.9% to 9%. For example, the mass percentage of the polymer may be 0.9%, 1%, 2%, 3%, 4%, 5%, 6%, 7%, 8%, or 9%, or fall in a range defined by any two of these values. When the mass percentage of the polymer is within the above range, a stable coating layer can be formed due to good adhesion of the polymer, and the second intermediate can be bonded to form the negative electrode material, alleviating the volume swelling of the negative electrode, lowering the thickness swelling rate of the lithium-ion battery, reducing the specific surface area of the negative electrode material, and improving the first-cycle charge/discharge efficiency of the negative electrode material.

In an embodiment of this application, based on the mass of the negative electrode material, a mass percentage of the first conductive material is 0.1% to 1%. For example, the mass percentage of the first conductive material may be 0.1%, 0.2%, 0.3%, 0.4%, 0.5%, 0.6%, 0.7%, 0.8%, 0.9%, or 1%, or fall in a range defined by any two of these values. When the mass percentage of the first conductive material is within the above range, the negative electrode material has good conductivity while the organic lithium salt is introduced into the second layer.

In an embodiment of this application, based on the mass of the negative electrode material, a mass percentage of the second conductive material is 0.1% to 1%. For example, the mass percentage of the second conductive material may be 0.1%, 0.2%, 0.3%, 0.4%, 0.5%, 0.6%, 0.7%, 0.8%, 0.9%, or 1%, or fall in a range defined by any two of these values. When the mass percentage of the second conductive material is within the above range, the negative electrode material has good conductivity while the polymer is introduced into the third layer.

In an embodiment of this application, a mass ratio of the first conductive material to the organic lithium salt is 1:9 to 2:9. For example, the mass ratio of the first conductive material to the organic lithium salt may be 1:9, 1.1:9, 1.2:9, 1.3:9, 1.4:9, 1.5:9, 1.6:9, 1.7:9, 1.8:9, 1.9:9, or 2:9, or fall in a range defined by any two of these values. When the mass ratio of the first conductive material to the organic lithium salt is within the foregoing range, the direct contact between the electrolyte and the active silicon can be reduced, the constituents of the SEI can be altered, and the lithium-ion battery has a low impedance, thereby improving the cycling performance of the lithium-ion battery.

In an embodiment of this application, a mass ratio of the second conductive material to the polymer is 1:9 to 2:9. For example, the mass ratio of the second conductive material to the polymer may be 1:9, 1.1:9, 1.2:9, 1.3:9, 1.4:9, 1.5:9, 1.6:9, 1.7:9, 1.8:9, 1.9:9, or 2:9, or fall in a range defined by any two of these values. When the mass ratio of the polymer to the second conductive material is within the above range, a stable coating layer can be formed due to good adhesion of the polymer, and the second intermediate can be bonded to form the negative electrode material, alleviating volume swelling of the negative electrode. In addition, the negative electrode material exhibits good conductivity and high first-cycle charge/discharge efficiency, lowering the thickness swelling rate of the lithium-ion battery.

A second aspect of this application provides a preparation method of the negative electrode material of the first aspect of this application. The method includes: providing silicon-based particles; performing carbon-coating on the silicon-based particles, to obtain a first intermediate; dispersing the first intermediate in water, to obtain a first dispersion; dispersing an organic lithium salt and a first conductive material in water, to obtain a second dispersion; mixing and stirring the first dispersion and the second dispersion to uniformity, to obtain a second intermediate through spray drying; and dispersing the second intermediate in water to obtain a third dispersion; dispersing a polymer and a second conductive material in water, to obtain a fourth dispersion; and mixing and stirring the third dispersion and the fourth dispersion to uniformity, to obtain the negative electrode material through spray drying. The steps in the preparation method described above are simple and easy to implement, and are suitable for industrial production.

In an embodiment of this application, the carbon-coating is to place the silicon-based particles in a fluidized bed, and introduce a carbon source gas at a temperature of 500°C to 650°C for reaction for 2 h to 3 h, to obtain the first intermediate, where the carbon source gas includes at least one of acetylene, methane, or propene. For example, the coating temperature may be 500°C, 510°C, 520°C, 530°C, 540°C,550°C, 560°C, 570°C, 580°C, 590°C, 600°C, 610°C, 620°C, 630°C, 640°C, or 650°C, or fall in a range defined by any two of these values. For example, coating duration may be 2 h, 2.2 h, 2.4 h, 2.6 h, 2.8 h, or 3 h, or fall in a range defined by any two of these values. Without wishing to be bound by any theory, the inventor of this application has found that after the carbon source gas is pyrolyzed at a high temperature and deposits on an outer side of a target particle, within a suitable temperature range, a higher deposition temperature means a faster pyrolysis rate of the carbon source gas and a higher utilization rate, resulting in faster growth of the coating layer; and at a same deposition temperature, the deposition duration determines a thickness and completeness of the coating layer. The carbon-coating duration and temperature is controlled, so that an amount of a carbon material during carbon-coating can be controlled.

In an embodiment of this application, the carbon source gas is mixed with an inert gas and then introduced into the fluidized bed. The inert gas includes at least one of nitrogen or argon. Based on a volume of the mixed gas, a volume percentage of the carbon source gas is 10% to 50%. For example, the volume percentage of the carbon source gas may be 10%, 15%, 20%, 25%, 30%, 35%, 40%, 45%, or 50%, or fall in a range defined by any two of these values. Without wishing to be bound by any theory, the inventor of this application has found that the use of the inert gas helps to improve uniformity of distribution of the carbon element in the coating layer.

In an embodiment of this application, Dᵥ50 of the first intermediate is 1.5 µm to 2.5 µm. For example, Dᵥ50 of the first intermediate may be 1.5 µm, 1.6 µm, 1.7 µm, 1.8 µm, 1.9 µm, 2 µm, 2.1 µm, 2.2 µm, 2.3 µm, 2.4 µm, or 2.5 µm, or fall in a range defined by any two of these values.

In an embodiment of this application, a solid content of the first dispersion is 10% to 15%. For example, the solid content of the first dispersion may be 10%, 11%, 12%, 13%, 14%, or 15%, or fall in a range defined by any two of these values.

In an embodiment of this application, a ratio of a mass of the first intermediate to a total mass of the mixture of the organic lithium salt and the first conductive material is 100:1 to 100:10. For example, a ratio of the mass of the first intermediate to the total mass of the mixture of the organic lithium salt and the first conductive material may be 100:1, 100:2, 100:3, 100:4, 100:5, 100:6, 100:7, 100:8, 100:9, or 100:10, or fall in a range defined by any two of these values. Without wishing to be bound by any theory, the inventor of this application has found that when the ratio of the mass of the first intermediate to the total mass of the mixture of the organic lithium salt and the first conductive material is 100:1 to 100:10, the reaction between the electrolyte and the silicon-based particles can be effectively reduced, improving constituents of an SEI film, improving cycling performance of a lithium-ion battery, and reducing consumption of the silicon element in the negative electrode material during reaction. In this case, the negative electrode material has a high reversible capacity.

In an embodiment of this application, a solid content of the second dispersion is 20% to 30%. For example, the solid content of the second dispersion may be 20%, 21%, 22%, 23%, 24%, 25%, 26%, 27%, 28%, 29%, or 30%, or fall in a range defined by any two of these values.

In an embodiment of this application, a solid content of a mixture of the first dispersion and the second dispersion is 10% to 15%. For example, the solid content of the mixture of the first dispersion and the second dispersion may be 10%, 11%, 12%, 13%, 14%, or 15%, or fall in a range defined by any two of these values.

In an embodiment of this application, an intake air temperature for spray drying of the second intermediate is 150°C to 170°C, and an outlet air temperature is 100°C to 110°C. Without wishing to be bound by any theory, the inventor of this application has found that when the spray drying parameters are within the above ranges, while the drying capacity and productivity of the equipment are balanced, the particle size distribution of the spray-dried second intermediate can be controlled, and particle size increase caused by particle agglomeration can be effectively reduced.

In an embodiment of this application, Dᵥ50 of the second intermediate is 1.6 µm to 2.7 µm. For example, the particle size Dᵥ50 may be 1.6 µm, 1.7 µm, 1.8 µm, 1.9 µm, 2 µm, 2.1 µm, 2.2 µm, 2.3 µm, 2.4 µm, 2.5 µm, 2.6 µm, or 2.7 µm, or fall in a range defined by any two of these values.

In an embodiment of this application, a solid content of the third dispersion is 20% to 30%. For example, the solid content of the third dispersion may be 20%, 21%, 22%, 23%, 24%, 25%, 26%, 27%, 28%, 29%, or 30%, or fall in a range defined by any two of these values.

In an embodiment of this application, a mass ratio of the polymer to the second conductive material is 9:1 to 9:2. For example, the mass ratio of the polymer to the second conductive material may be 9:1, 9:1.1, 9:1.2, 9:1.3, 9:1.4, 9:1.5, 9:1.6, 9:1.7, 9:1.8, 9:1.9, or 9:2, or fall in a range defined by any two of these values. Without wishing to be bound by any theory, the inventor of this application has found that the introduction of the conductive material can alleviate the problem of reduced conductivity of the negative electrode material caused by coating of the polymer.

In an embodiment of this application, a ratio of the second intermediate to a total mass of a mixture of the polymer and the second conductive material is 100:1 to 100:10. For example, a ratio of the second intermediate to the total mass of the mixture of the polymer and the second conductive material may be 100:1, 100:2, 100:3, 100:4, 100:5, 100:6, 100:7, 100:8, 100:9, or 100:10, or fall in a range defined by any two of these values. Without wishing to be bound by any theory, the inventor of this application has found that when the ratio of the mass of the first intermediate to the total mass of the mixture of the organic lithium salt and the first conductive material is 100:1 to 100:10, the reactions between the electrolyte and the silicon-based particles can be effectively reduced, improving constituents of an SEI film, improving cycling performance of the lithium-ion battery, and reducing consumption of the silicon element in the negative electrode material during reaction. In this case, the negative electrode material has a high reversible capacity.

In an embodiment of this application, a solid content of the fourth dispersion is 18% to 22%. For example, the solid content of the fourth dispersion may be 18%, 18.5%, 19%, 19.5%, 20%, 20.5%, 21%, 21.5%, or 22%, or fall in a range defined by any two of these values.

In an embodiment of this application, a solid content of a mixture of the third dispersion and the fourth dispersion is 20% to 25%. For example, the solid content of the mixture of the third dispersion and the fourth dispersion may be 20%, 21%, 22%, 23%, 24%, or 25%, or fall in a range defined by any two of these values.

In an embodiment of this application, an intake air temperature for spray drying of the negative electrode material is 200°C to 230°C, and an outlet air temperature is 100°C to 110°C. Without wishing to be bound by any theory, the inventor of this application has found that when the spray drying parameters are within the above ranges, the particle size distribution of the spray-dried negative electrode material can be controlled while a drying capacity and productivity of the equipment are balanced.

In an embodiment of this application, the coating described in this application may be partial coating or complete coating.

A third aspect of this application provides an electrochemical apparatus, including a positive electrode plate, a separator, an electrolyte, and a negative electrode plate; the negative electrode including a negative electrode active material layer; where the negative electrode active material layer includes the negative electrode material according to the first aspect of this application.

In an embodiment of this application, the electrolyte includes an additive, where the additive includes at least one of difluoroethylene carbonate or fluoroethylene carbonate. Based on a mass of the electrolyte, a mass percentage of the additive is 0.5% to 10%, and preferably, 2% to 7%. For example, the mass percentage of the additive may be 0.5%, 1%, 2%, 3%, 4%, 5%, 6%, 7%, 8%, 9%, or 10%, or fall in a range defined by any two of these values. Without wishing to be bound by any theory, the inventor of this application has found that difluoroethylene carbonate or fluoroethylene carbonate can react with the negative electrode material during cycling of a lithium-ion battery to alleviate contact between the electrolyte and the negative electrode, improving the cycling performance.

In this application, the electrolyte further includes a lithium salt. The lithium salt is not particularly limited in this application. Any lithium salt known in the art can be used as long as the objectives of this application can be achieved. For example, the lithium salt is selected from at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂. Based on the mass of the electrolyte, a mass percentage of the lithium salt is 8% to 20%. For example, the mass percentage of the lithium salt may be 8%, 10%, 12%, 14%, 16%, 18%, or 20%, or fall in a range defined by any two of the above values.

A base solvent is not particularly limited in this application as long as the objectives of this application can be achieved. For example, the base solvent may include, but is not limited to, at least one of carbonate compound, carboxylate compound, ether compound, or another organic solvent. The carbonate compound may include, but is not limited to, at least one of a linear carbonate compound, a cyclic carbonate compound, or a fluorocarbonate compound. The linear carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The ether compound may include, but is not limited to, at least one of dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. An amount of the base solvent in the electrolyte is not particularly limited in this application as long as the objectives of this application can be achieved.

In this application, the electrochemical apparatus further includes a positive electrode plate. The positive electrode plate includes a positive electrode current collector and a positive electrode active material layer disposed on at least one surface of the positive electrode current collector. The "positive electrode active material layer disposed on at least one surface of the positive electrode current collector" means that the positive electrode active material layer may be disposed on one surface of the positive electrode current collector in a thickness direction of the positive electrode current collector, or on two surfaces of the positive electrode current collector in a thickness direction of the positive electrode current collector. It should be noted that the "surface" herein may be all layers of the surface of the positive electrode current collector or some layers of the surface of the positive electrode current collector. This is not particularly limited in this application as long as the objectives of this application can be achieved.

The positive electrode current collector is not particularly limited in this application as long as the objectives of this application can be achieved. For example, the positive electrode current collector may include an aluminum foil, aluminum alloy foil, a composite current collector (for example, an aluminum-carbon composite current collector), or the like.

The positive electrode active material is not particularly limited in this application as long as the objectives of this application can be achieved. For example, the positive electrode active material may include, but is not limited to, at least one of lithium cobalt oxide, lithium nickel cobalt manganese oxide, lithium nickel aluminum manganese oxide, lithium iron phosphate, lithium vanadium phosphate, lithium cobalt phosphate, lithium manganese phosphate, lithium iron silicate, lithium vanadium silicate, lithium cobalt silicate, lithium manganese silicate, spinel-type lithium manganate, spinel-type lithium nickel manganate, or lithium titanate.

The positive electrode material layer may further include a conductive agent and an adhesive. Types of the conductive agent and the adhesive are not particularly limited in this application as long as the objectives of this application can be achieved. A mass ratio of the positive electrode active material, the conductive agent, and the adhesive in the positive electrode material layer is not particularly limited in this application. Persons skilled in the art can make selections based on actual needs as long as the objectives of this application can be achieved.

The adhesive is not particularly limited in this application as long as the objectives of this application can be achieved. For example, the adhesive may include, but is not limited to, at least one of adhesive polymers such as polyvinylidene fluoride, polytetrafluoroethylene, polyolefin, sodium carboxymethyl cellulose, lithium carboxymethyl cellulose, modified polyvinylidene fluoride, modified SBR rubber, or polyurethane, where a polyolefin adhesive includes at least one of polyethylene, polypropylene, polyolefin ester, polyolefin alcohol, or polyacrylic acid.

The conductive agent is not particularly limited in this application as long as the objectives of this application can be achieved. For example, the conductive agent may include, but is not limited to, a carbon-based material, metal-based material, conductive polymer, or a mixture thereof. The carbon-based material includes natural graphite, artificial graphite, carbon black, acetylene black, Ketjen black, or carbon fiber. The metal-based material includes metal powder or metal fiber of copper, nickel, aluminum, silver, or the like. The conductive polymer includes a polyphenylene derivative.

Thicknesses of the positive electrode current collector and the positive electrode material layer are not particularly limited in this application as long as the objectives of this application can be achieved. For example, the thickness of the positive electrode current collector is 5 µm to 20 µm, and a thickness of a positive electrode material layer applied on one surface is 30 µm to 120 µm.

Optionally, the positive electrode plate may further include a conductive layer, and the conductive layer is between the positive electrode current collector and the positive electrode material layer. Composition of the conductive layer is not particularly limited, and the conductive layer may be a conductive layer commonly used in the art. The conductive layer includes a conductive agent and an adhesive. The conductive agent and the adhesive in the conductive layer are not particularly limited in this application, and may be, for example, at least one of the foregoing conductive agents and the foregoing adhesives.

In this application, the electrochemical apparatus may include a separator. The separator is not particularly limited in this application as long as the objectives of this application can be achieved. For example, the material of the separator may include, but is not limited to, at least one of polyolefin (PO) mainly including polyethylene (PE) and polypropylene (PP), polyester (for example, a polyethylene terephthalate (PET) film), cellulose, polyimide (PI), polyamide (PA), spandex, or aramid. A type of the separator may include at least one of a woven film, a non-woven film, a microporous film, a composite film, a laminated film, or a spinning film.

In some embodiments of this application, the separator may include a substrate layer and a surface treatment layer. The substrate layer may be a non-woven fabric, film, or composite film having a porous structure, and a material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film.

Optionally, the surface treatment layer is provided on at least one surface of the substrate layer, and the surface treatment layer may be a polymer layer or an inorganic substance layer, or a layer formed by a mixture of a polymer and an inorganic substance.

In some embodiments of this application, the inorganic substance layer includes inorganic particles and an adhesive. The inorganic particles are not particularly limited in this application. For example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The adhesive is not particularly limited in this application. For example, the adhesive may be at least one of the foregoing adhesives.

In some embodiments of this application, the polymer layer includes a polymer, and a material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

In some embodiments of this application, the inorganic substance layer may further include a thickener and a wetting agent. Types of the thickener and wetting agent are not particularly limited in this application as long as the objectives of this application can be achieved. For example, the thickener may include, but is not limited to, at least one of sodium carboxymethyl cellulose or lithium carboxymethyl cellulose; and the wetting agent may include, but is not limited to, at least one of dimethylsiloxane, sodium dodecyl sulfate, trialkyl phosphate, methyl decanoate, or dodecyl acetate.

A thickness of the separator is not particularly limited in this application as long as the objectives of this application can be achieved. For example, the thickness of the separator may be 4 µm to 30 µm.

In this application, the electrochemical apparatus further includes a negative electrode plate, and the negative electrode plate includes a negative electrode current collector and a negative electrode active material layer disposed on at least one surface of the negative electrode current collector. The "negative electrode active material layer disposed on at least one surface of the negative electrode current collector" means that the negative electrode active material layer may be disposed on one surface of the negative electrode current collector in a thickness direction of the negative electrode current collector, or on two surfaces of the negative electrode current collector in a thickness direction of the negative electrode current collector. It should be noted that the "surface" herein may be all layers of the surface of the negative electrode current collector or some layers of the surface of the negative electrode current collector. This is not particularly limited in this application as long as the objectives of this application can be achieved.

The negative electrode current collector is not particularly limited in this application as long as the objectives of this application can be achieved. For example, the negative electrode current collector may include a copper foil, copper alloy foil, nickel foil, stainless steel foil, titanium foil, foamed nickel, foamed copper, a composite current collector, or the like. For example, the composite current collector may be a lithium copper composite current collector, carbon copper composite current collector, nickel copper composite current collector, or titanium copper composite current collector.

In some embodiments of this application, the negative electrode active material layer may further include a conductive agent and an adhesive. Types of the conductive agent and the adhesive are not particularly limited in this application as long as the objectives of this application can be achieved. For example, the adhesive may include, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like. The conductive agent may include, but is not limited to, a carbon-based material, metal-based material, conductive polymer, and a mixture thereof. The carbon-based material is selected from carbon black, acetylene black, Ketjen black, carbon fiber, or any combination thereof. The metal-based material is selected from metal powder, metal fiber, copper, nickel, aluminum, or silver. The conductive polymer is a polyphenylene derivative. A mass ratio of the negative electrode material, the conductive agent, and the adhesive in the negative electrode active material layer is not particularly limited in this application. Persons skilled in the art can make selections based on actual needs as long as the objectives of this application can be achieved.

A thickness of the negative electrode active material layer is not particularly limited in this application as long as the objectives of this application can be achieved. For example, a thickness of a negative electrode active material layer applied on one surface is 30 µm to 120 µm.

A thickness of the negative electrode current collector is not particularly limited in this application as long as the objectives of this application can be achieved. For example, a thickness of the negative electrode current collector is 4 µm to 15 µm.

The electrochemical apparatus further includes a housing, configured to accommodate the positive electrode plate, separator, negative electrode plate, electrolyte, and another component known in the field of electrochemical apparatuses. The another component is not limited in this application. The housing is not particularly limited in this application, and may be any housing known in the art, as long as the objectives of this application can be achieved. For example, the housing may be a hard housing or a flexible housing. A material of the hard housing may be metal. A type of the metal is not limited in this application. Any known hard metal housing in the field can be used as long as the objectives of this application can be achieved. The flexible housing may be a metal plastic film, for example, aluminum plastic film, steel plastic film, or the like.

A preparation process of the electrochemical apparatus in this application is well known to persons skilled in the art, and is not particularly limited in this application. For example, the preparation process of the electrochemical apparatus may include but is not limited to the following steps. A positive electrode plate, a separator, and a negative electrode plate are stacked in sequence and go through operations such as winding and folding as needed to obtain an electrode assembly with a wound structure; the electrode assembly is put into a housing; an electrolyte is injected into the housing; and the housing is sealed to obtain the electrochemical apparatus. Alternatively, a positive electrode plate, a separator, and a negative electrode plate are stacked in sequence; four corners of the entire laminated structure are fixed with tapes to obtain an electrode assembly with a laminated structure; the electrode assembly is put into a housing; an electrolyte is injected into the housing; and the housing is sealed to obtain the electrochemical apparatus. In addition, an overcurrent prevention element, a guide plate, and the like may also be placed in the housing as needed, so as to prevent pressure increase, overcharge, and over-discharge in the electrochemical apparatus.

A fourth aspect of this application provides an electric device, including the electrochemical apparatus according to the third aspect of this application.

The electric device in this application is not particularly limited, and may be any known electric device in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### Examples

The following describes some embodiments of this application more specifically by using examples and comparative examples. Various tests and evaluations are performed in the following methods. In addition, unless otherwise specified, "part" and "%" are based on weight.

### Test method and device

### Test for mass percentage of Si element

Preparation of digestion sample: Silicon-based particles or negative electrode material of 0.1000 g was placed in a nickel crucible. After KOH of 1.5 g was added, the crucible was covered. A muffle furnace was heated to 400°C. The heating procedure was that the furnace was heated from a room temperature to 300°C within 2 h and from 300°C to 400°C within 2 h. Then, the furnace was naturally cooled to 80°C. When the digestion procedure was completed, the crucible was taken out and cooled to a room temperature. A digested sample was taken out and placed in a polytetrafluoroethylene beaker.

Titration of digestion sample with standard sodium hydroxide solution: Boiling water of 30 mL was added into the polytetrafluoroethylene beaker. Leaching was performed for 1 h. Then the crucible was taken out with tweezers and rinsed. A volume was 50 mL. After filtering was performed on the solution, the solution was transfered to a beaker of 400 mL. After filtering, concentrated nitric acid of 20 mL was added to the beaker on one occasion to neutralize the solution, so as to make the solution acidic. When the solution was cooled to a room temperature, the solid KCl was constantly added during stirring until saturation, and then excess KCl of 2 g was added. A 200 g/L potassium fluoride solution of 10 mL was added. A white sediment occurred. Aging was performed for 15 min. Filtering was performed with a medium quantitative filter paper. The beaker and sediment were rinsed with 8 mL of the potassium chloride solution for each time, and were rinsed three times. The filter paper was put back to the original beaker. A potassium chloride ethanol solution of 20 mL and 10 drops of phenolphthalein were added. The residual acid was neutralized with the standard sodium hydroxide solution. The filter paper was stirred and the beaker wall was scrubbed until the solution turned light red. During this process, the filter paper was pulped with a glass rod for reaction of 1 h. Neutralized boiling water of 200 mL was added to the beaker (10 drops of phenolphthalein were added to the boiled water, and the water was neutralized with the standard sodium hydroxide solution until the water turned light red). Titration was performed with the standard sodium hydroxide solution, and an end point was light red. A volume V of the consumed standard sodium hydroxide solution during the titration was recorded.

Titration of blank sample with standard sodium hydroxide solution: Except that the digested sample was not added, other steps were the same as steps in the titration of the digestion sample with the standard sodium hydroxide solution. A blank sample was prepared in this way. A volume V₀ of the standard sodium hydroxide solution consumed by the titration of the blank sample was recorded.

An amount of silicon was calculated according to the following formula: ω_{Si}=(V-V₀)×c×7.02/m×100%, where c was a concentration of the standard sodium hydroxide solution and measured in mol/L; V was the volume of the standard sodium hydroxide solution consumed during titration and measured in L; V₀ was the volume of the standard sodium hydroxide solution consumed by the blank sample and measured in L; 7.02 was a molar mass of 1/4 Si and measured in g/mol; and m was a mass of a sample and measured in g.

### Test for specific surface area

The test for specific surface area of silicon-based particles in each example and comparative example was conducted using a specific surface area analyzer (TriStar II 3020M, provided by US Micromeritics) based on nitrogen adsorption. The specific test was conducted in accordance with the national standard GB/T 19587-2017 "Determination of the specific surface area of solids by gas adsorption using the BET method".

### Test for mass percentage of carbon in first layer

A negative electrode material was heated and burned at high temperature in a high-frequency furnace under an oxygen-rich condition to oxidize carbon into carbon dioxide, and the gas was processed and entered a corresponding absorption cell to absorb corresponding infrared radiation, and then was converted into a corresponding signal by a detector. The signal was sampled by a computer and converted into a value directly proportional to a concentration of the carbon dioxide after linear correction. Values in an entire analysis procedure were added. After the analysis, a sum was divided by mass and then multiplied by a correction coefficient on the computer. A value of a blank sample was deducted. The mass percentage of the carbon was obtained. The test was conducted using a high-frequency infrared carbon-sulfur analyzer (HCS-140 from Shanghai Dekai).

### Test for resistivity of negative electrode material

In a drying room, a resistivity of a negative electrode material in each example and comparative example was measured with a powder resistivity analyzer.

### Test for particle size

Dᵥ50 and Dᵥ90 of silicon-based particles and a negative electrode material were measured with a Mastersizer 3000 particle size analyzer produced by Malvern.

### Preparation of button half cell

(1) A negative electrode material prepared in each example or comparative example, acetylene black, and sodium alginate were added to deionized water in a mass ratio of 80:10:10 and stirred to uniformity to form a slurry with a solid content of 40%. The slurry was applied to a copper foil of 8 µm with a scraper, to form a coating layer of 100 µm. Then drying was performed in a vacuum drying oven at 85°C for 12 hours. Cutting was performed with a punching machine in a dry environment, to obtain a circular disc with a diameter of 1 cm. In this case, a positive electrode was obtained.

Electrolyte and separator: In a dry argon environment, ethylene carbonate (EC) and dimethyl carbonate (DMC) were mixed to uniformity in a volume ratio of 1:1, to obtain a mixed solution. LiPF₆ of 1 mol/L and fluoroethylene carbonate (FEC) of 5 vol% were added to the mixed solution, and stirred to uniformity to obtain the electrolyte. A polyethylene film of 12 µm was used as a separator.

### (2) Assembly of button half cell

For the forgoing positive electrode plate, a lithium metal plate was used as a counter electrode. An arrangement sequence was as follows: the positive electrode, the separator, and the lithium metal plate. Then the foregoing electrolyte was added. The button half cell was assembled in a glove box.

### Test for first-cycle charge/discharge specific capacity

For a button half cell, in an environment of 25°C under atmospheric pressure, the prepared button half cell was discharged at a constant current of 0.1C to 0.01 V and then left standing for 5 min. A discharge specific capacity at this time was recorded as a first-cycle discharge specific capacity. Then, the cell was charged at a constant current of 0.1C to 1.5 V and charged at a constant voltage to a current of 0.05C, and then the cell was left standing for 5 min. This formed one charge-discharge cycle. A charge capacity at this time was recorded as a first-cycle charge specific capacity. The first-cycle charge/discharge efficiency=(first-cycle charge specific capacity/first-cycle discharge specific capacity)x100%.

### Test for first-cycle swelling rate under full lithiation

For a button half cell, before preparing the button half cell, a thickness H₀ of a positive electrode plate was measured with a micrometer. In an environment of 25°C under atmospheric pressure, the prepared button half cell was discharged at a constant current of 0.1C to 0.01 V and was left standing for 30 min. Then the button half cell was disassembled in a glove box. A plate thickness H₁ of the fully-lithiated positive electrode plate was measured with a micrometer. First-cycle swelling rate under full lithiation=(H₁-H₀)/H₀×100%

### Test for cycling performance and swelling rate

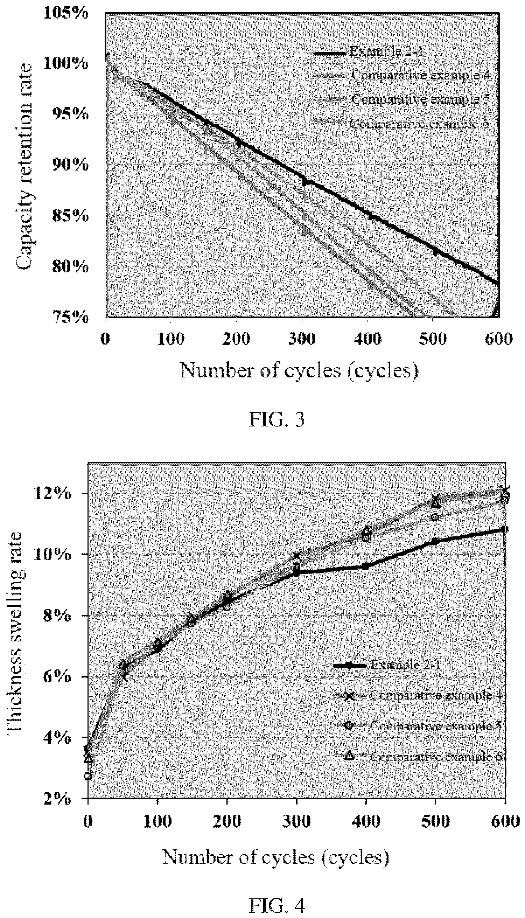

Before the test, an initial thickness of a lithium-ion battery was measured with a micrometer. At test temperatures of 25°C and 45°C, the lithium-ion battery was charged at a constant current of 3.4C to 4.4 V, then charged at a constant voltage to 0.025C, left standing for 5 min, and then discharged at a constant current of 0.5C to 3.0 V. A capacity obtained in this step was an initial capacity of the lithium-ion battery. Then, a cycling test with charge performed at 3.4C and discharge performed at 0.5C was performed. A ratio of a capacity in each step to the initial capacity was calculated to obtain a capacity decay curve. For cycling at 25°C, the number of cycles corresponding to 90% capacity retention rate represented room-temperature cycling performance of the battery; and for cycling at 45°C, the number of cycles corresponding to 80% capacity retention rate represented high-temperature cycling performance of the battery. Comparison of the cycling performance of the lithium-ion battery was made based on comparison between the numbers of cycles under the foregoing two conditions. FIG. 2 and FIG. 3 are diagrams of performance corresponding to the 610^{th} cycle at 25°C and 45°C during the cycling, to be specific, are cycling performance comparison diagrams for the lithium-ion battery at 25°C and 45°C.

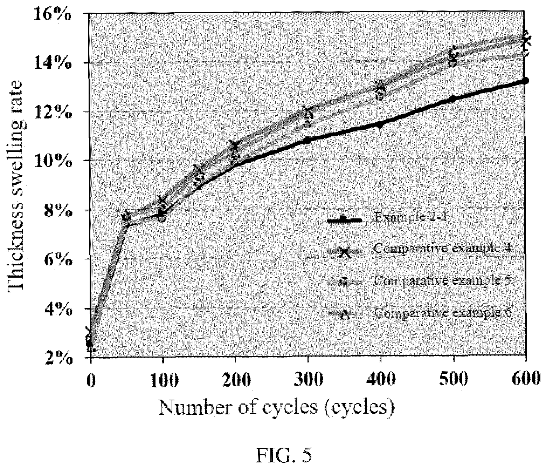

Thicknesses of the lithium-ion battery, discharged to 3.0 V, at the 400^{th} cycle during cycling at 25°C and 45°C were respectively obtained through measurement. A room-temperature cycling swelling rate of the lithium-ion battery was represented by a ratio of a difference between the thickness of the lithium-ion battery, discharged to 3.0 V, at the 400^{th} cycle during cycling at 25°C and the initial thickness of the lithium-ion battery to the initial thickness of the lithium-ion battery. A high-temperature cycling swelling rate of the lithium-ion battery was represented by a ratio of a difference between the thickness of the lithium-ion battery, discharged to 3.0 V, at the 400^{th} cycle during cycling at 45°C and the initial thickness of the lithium-ion battery to the initial thickness of the lithium-ion battery. FIG. 4 and FIG. 5 are diagrams of thickness swelling rates corresponding to the 600^{th} cycle at 25°C and 45°C during the cycling, to be specific, are thickness swelling rate comparison diagrams for the lithium-ion battery at 25°C and 45°C.

At 25°C, the lithium-ion battery was charged/discharged at a low rate at the 2^{nd}, 4^{th}, 50^{th}, 100^{th}, 150^{th}, 200^{th}, 300^{th}, 400^{th}, and 500^{th} cycles during cycling. The process was as follows. The lithium-ion battery was charged at a constant current of 0.7C to 4.53 V; charged at a constant voltage of 4.53 V to 0.05C; left standing for 5 minutes; discharged at a constant current of 0.2C to 3.0 V; and left standing for 5 minutes. Then subsequent cycling was continued.

### Example 1-1

### <Preparation of negative electrode material>

(1) 200 kg of silicon-carbon particles were used and classified through jet classification, to obtain silicon-based particles with particle size Dᵥ50 being 2.0 µm and Dᵥ90 being 7.4 µm.
(2) Through high-pressure transport, 20 kg of the classified silicon-based particles were transported into a fluidized bed, and were left standing for approximately 30 min. Then an inlet valve and an exhaust valve of the fluidized bed were closed, and vacuum pumping was carried out. When a chamber pressure reached -101 kPa, the vacuum pumping was stopped, and nitrogen was introduced at a rate of 100 L/min to achieve positive pressure. The vacuum pumping and nitrogen supply were repeated more than five times, and then an oxygen amount inside the chamber was measured. When the oxygen amount dropped below 10 ppm, the exhaust valve was opened, and a stirring paddle of the fluidized bed was activated with a speed of 150 rpm. Nitrogen was introduced at a rate of 200 L/min. The fluidized bed was heated to 550°C at a rate of 5°C/min, and the temperature was kept for 1 h. After the temperature keeping period, an inlet pipe valve of the fluidized bed was switched on, to introduce an acetylene/nitrogen gas mixture into the fluidized bed, with acetylene accounting for 25% by volume and a gas flow rate set to 200 L/min. The reaction lasted for 150 min. After the reaction, nitrogen was passed at 150 L/min, and the stirring paddle speed was adjusted to 100 rpm for cooling. A resulted material was cooled to a room temperature, to obtain a first intermediate.
(3) 14 kg of deionized water was used, and during stirring, 2 kg of first intermediate powder were added to the deionized water, resulting in a first dispersion. After 2 hours of thorough stirring, 0.4 kg of a second dispersion that had a solid content of 25% and that contained lithium polyacrylate and single-walled carbon nanotubes was added to the first dispersion during stirring (a mass ratio of lithium polyacrylate and single-walled carbon nanotubes was 9:1, and water was used as a solvent). The mixture was thoroughly stirred for 3 h. A resulting slurry has a solid content of approximately 12.8%. Based on a mass of the first intermediate, a percentage of the added lithium polyacrylate was 4.5%, and a percentage of the added single-walled carbon nanotubes was 0.5%. A spray dryer was started, with an intake air temperature set to 160°C and an outlet air temperature to 105°C. After the intake air temperature and the outlet air temperature reached the set ranges, deionized water was supplied at 70 mL/min. After stable operation for approximately 30 min, the slurry was supplied. Dried second intermediate powder was obtained at a material outlet.
(4) 6 kg of deionized water was used, and during stirring, 2 kg of second intermediate powder were added to the deionized water, resulting in a third dispersion. After 2 hours of thorough stirring, 0.5 kg of a fourth dispersion that had a solid content of 20% and that contained polyurethane and single-walled carbon nanotubes was added to the third dispersion during stirring (a mass ratio of polyurethane and single-walled carbon nanotubes was 9:1, and water was used as a solvent). The mixture was thoroughly stirred for 3 h. A resulting slurry has a solid content of approximately 24.7%. Based on a mass of the second intermediate, a percentage of the added polyurethane was 4.5%, and a percentage of the added single-walled carbon nanotubes was 0.5%. The spray dryer was started, with an intake air temperature set to 220°C and an outlet air temperature to 105°C. After the intake air temperature and the outlet air temperature reached the set ranges, deionized water was supplied at 300 mL/min. After stable operation for approximately 30 min, the slurry was supplied. A dried negative electrode material was obtained at the material outlet.

Based on a mass of the negative electrode material, a mass percentage of lithium polyacrylate was 4.05%, a mass percentage of a first conductive material was 0.45%, a mass percentage of polyurethane was 4.14%, and a mass percentage of a second conductive material was 0.46%.

FIG. 1 is a schematic structural diagram of the negative electrode material prepared in Example 1-1.

### Examples 1-2 to 1-11

Examples 1-2 to 1-11 were the same as Example 1-1 except that a mass percentage of the carbon in the first layer, a mass percentage of organic lithium salt, a mass percentage of the first conductive material, a mass ratio of organic lithium salt to the first conductive material, a mass percentage of polyurethane, a mass percentage of the second conductive material, and a mass ratio of polyurethane to the second conductive material were adjusted according to Table 1 in

### <Preparation of negative electrode material>.

### Example 1-12

Example 1-12 was the same as Example 1-1 except that the silicon-carbon particles were replaced with silicon-oxygen particles in <Preparation of negative electrode material>, where the silicon-oxygen particles had a silicon amount of 49.4%, a specific surface area was 3.8 m²/g, Dᵥ50 was 2.1 µm, and Dᵥ90 was 7.5 µm.

### Example 1-13

Example 1-13 was the same as Example 1-1 except that lithium polyacrylate was replaced with lithium poly(acrylamide-co-acrylic acid) in <Preparation of negative electrode material>.

### Example 1-14

Example 1-14 was the same as Example 1-1 except that the single-walled carbon nanotubes in the first conductive material were replaced with multi-walled carbon nanotubes in

### <Preparation of negative electrode material>.

### Example 1-15

Example 1-15 was the same as Example 1-1 except that the single-walled carbon nanotubes in the first conductive material were replaced with conductive carbon black in

### <Preparation of negative electrode material>.

### Example 1-16

Example 1-16 was the same as Example 1-1 except that the single-walled carbon nanotubes in the second conductive material were replaced with multi-walled carbon nanotubes in

### <Preparation of negative electrode material>.

### Example 1-17

Example 1-17 was the same as Example 1-1 except that the single-walled carbon nanotubes in the second conductive material were replaced with conductive carbon black in

### <Preparation of negative electrode material>.

### Example 2-1

### <Preparation of positive electrode plate>

A positive electrode active material LiCoO₂, conductive carbon black, and polyvinylidene difluoride (PVDF) were mixed and stirred to uniformity in an N-methylpyrrolidone solvent system in a mass ratio of 95:2.5:2.5, to obtain a positive electrode slurry. A negative electrode slurry was evenly applied on one surface of a negative electrode current collector copper foil of 6 µm, and dried at 120°C, to obtain a negative electrode plate with one surface coated with a negative electrode material layer, where a coating mass of the negative electrode material layer was 142 mg/1540 mm². Then the foregoing steps were repeated on another surface of the copper foil, to obtain a negative electrode plate with two surfaces coated with negative electrode material layers. The negative electrode plate was dried at 120°C and then cold pressed, followed by cutting and tab welding, to obtain a negative electrode plate of 78 mm×875 mm for later use. A thickness of the negative electrode material layer applied on one surface is 54.5 µm.

### <Preparation of negative electrode plate>

Graphite, the negative electrode material prepared according to Example 1-1, a conductive agent (conductive carbon black, Super P^{®}), and an adhesive PAA were dissolved in a deionized water solvent and mixed to uniformity in a ratio of 80:10:5:5 to prepare a negative electrode slurry with a solid content of 70wt%. Then deionized water was added. A viscosity of the slurry was adjusted to 5000 Pa·s. In this way, a negative electrode slurry was prepared. The positive electrode slurry was evenly applied on one surface of a positive electrode current collector copper foil of 10 µm, and dried at 120°C, to obtain a positive electrode plate with one surface coated with a positive electrode material layer, where a coating mass of the positive electrode material layer was 267.8 mg/1540 mm². Then the foregoing steps were repeated on another surface of the copper foil to obtain a positive electrode plate with two surfaces coated with positive electrode material layers. The positive electrode plate was dried at 120°C and then cold pressed, followed by cutting and tab welding, to obtain a positive electrode plate of 74 mm×867 mm for later use. A thickness of the positive electrode material layer applied on one surface is 42 µm.

### <Preparation of electrolyte>

In a dry argon environment, propylene carbonate (PC), ethylene carbonate (EC), and diethyl carbonate (DEC) were mixed in a mass ratio of 1:1:1, to obtain a base solvent. A lithium salt LiPF₆ was then added, dissolved, and mixed to uniformity, to obtain an electrolyte. Based on a mass of the electrolyte, a mass percentage of lithium salt LiPF₆ was 12.5%, and the remaining portion is the base solvent.

### <Separator>

A polyethylene/polypropylene composite film of 8 µm was used as a separator.

### <Preparation of lithium-ion battery>

The positive electrode plate, the separator, and the negative electrode plate were stacked in sequence, so that the separator was located between the positive electrode plate and the negative electrode plate to provide separation. Then, the resulting stack was wound to form a jelly roll. After tabs were welded, the jelly roll was placed in an outer packaging aluminum plastic film. The prepared electrolyte was injected into the jelly roll that was dried, followed by processes such as vacuum packaging, standing, formation, shaping, degassing, and capacity testing to obtain a lithium-ion battery.

### Examples 2-2 to 2-17

The Examples 2-2 to 2-17 were the same as the Example 2-1 except that a negative electrode material in <Preparation of negative electrode plate> was the negative electrode material prepared in Examples 1-2 to 1-17.

### Comparative example 1

Comparative example 1 was the same as Example 1-1 except that silicon-based particles in <Preparation of negative electrode material> had no coating layers. For specific data, refer to Table 1.

### Comparative example 2

Comparative example 2 was the same as the Example 1-1 except that silicon-based particles in <Preparation of negative electrode material> did not have the second coating layer of organic lithium salt. For specific data, refer to Table 1.

### Comparative example 3

Comparative example 3 was the same as Example 1-1 except that silicon-based particles in <Preparation of negative electrode material> did not have the third coating layer of polymer. For specific data, refer to Table 1.

### Comparative examples 4 to 6

Comparative examples 4 to 6 were the same as the Example 2-1 except that a negative electrode material in <Preparation of negative electrode plate> was the negative electrode material prepared in Comparative examples 1 to 3.

### Examples 3-1 to 3-15

Examples 3-1 to 3-15 were the same as the Example 2-1 except that in <Preparation of electrolyte>, difluoroethylene carbonate (DFEC) and fluoroethylene carbonate (FEC) were added to the electrolyte according to Table 3, mass percentages of DFEC and FEC were adjusted, a mass percentage of the base solvent was changed accordingly, a mass ratio of each component of the base solvent was unchanged, and a mass percentage of the lithium salt LiPF₆ was unchanged.

Preparation parameters and performance parameters of the examples and comparative examples are shown in Table 1 to Table 3.

**Table 1**

| | Negative electrode material | | | | | | | | | | |
|---|---|---|---|---|---|---|---|---|---|---|---|
| | First layer | Second layer | | | Third layer | | | Resistivity (Ω·cm) | Silicon amount (%) | Dᵥ50 (µm) | Dᵥ9 0 (µm) |
| | Mass percentage of carbon (%) | Mass percentage of organic lithium salt (%) | Mass percentage of first conductive material (%) | Mass ratio of organic lithium salt to first conductive material (%) | Mass percentage of polyurethane (%) | Mass percentage of second conductive material (%) | Mass ratio of polyurethane to second conductive material (%) | | | | |
| Example 1-1 | 3 | 4.05 | 0.45 | 9:1 | 4.14 | 0.46 | 9:1 | 3.1 | 44.07 | 8.1 | 27 |
| Example 1-2 | 3 | 0.90 | 0.10 | 9:1 | 4.14 | 0.46 | 9:1 | 5.0 | 45.84 | 7.9 | 26 |
| Example 1-3 | 3 | 9.00 | 1.00 | 9:1 | 4.14 | 0.46 | 9:1 | 3.4 | 41.33 | 8.0 | 28 |
| Example 1-4 | 3 | 4.05 | 0.45 | 9:1 | 0.90 | 0.10 | 9:1 | 5.4 | 45.87 | 7.0 | 26 |
| Example 1-5 | 3 | 4.05 | 0.45 | 9:1 | 9.00 | 1.00 | 9:1 | 3.0 | 41.39 | 9.5 | 30 |
| Example 1-6 | 3 | 4.05 | 0.68 | 9:1.5 | 4.14 | 0.46 | 9:1 | 3.7 | 44.03 | 8.2 | 26 |
| Example 1-7 | 3 | 4.05 | 0.90 | 9:2 | 4.14 | 0.46 | 9:1 | 3.5 | 43.91 | 8.1 | 27 |
| Example 1-8 | 3 | 4.05 | 0.45 | 9:1 | 4.14 | 0.69 | 9:1.5 | 2.9 | 43.97 | 8.2 | 27 |
| Example 1-9 | 3 | 4.05 | 0.45 | 9:1 | 4.14 | 0.92 | 9:2 | 2.7 | 43.87 | 8.0 | 28 |
| Example 1-10 | 1 | 4.05 | 0.45 | 9:1 | 4.14 | 0.46 | 9:1 | 3.2 | 45.05 | 8.0 | 26 |
| Example 1-11 | 5 | 4.05 | 0.45 | 9:1 | 4.14 | 0.46 | 9:1 | 3.2 | 43.08 | 8.1 | 28 |
| Example 1-12 | 3 | 4.05 | 0.45 | 9:1 | 4.14 | 0.46 | 9:1 | 3.4 | 43.52 | 8.5 | 28 |
| Example 1-13 | 3 | 4.05 | 0.45 | 9:1 | 4.14 | 0.46 | 9:1 | 3.1 | 44.17 | 8.3 | 27 |
| Example 1-14 | 3 | 4.05 | 0.45 | 9:1 | 4.14 | 0.46 | 9:1 | 3.2 | 44.07 | 8.3 | 26 |
| Example 1-15 | 3 | 4.05 | 0.45 | 9:1 | 4.14 | 0.46 | 9:1 | 3.0 | 44.15 | 8.2 | 28 |
| Example 1-16 | 3 | 4.05 | 0.45 | 9:1 | 4.14 | 0.46 | 9:1 | 3.1 | 44.18 | 8.4 | 27 |
| Example 1-17 | 3 | 4.05 | 0.45 | 9:1 | 4.14 | 0.46 | 9:1 | 3.3 | 44.69 | 8.0 | 26 |
| Comparative example 1 | / | / | / | / | / | / | / | 0.4 | 50.10 | 2.0 | 7.4 |
| Comparative example 2 | 3 | / | / | / | 4.14 | 0.50 | 9:1 | 5.7 | 46.32 | 7.8 | 25 |
| Comparative example 3 | 3 | 4.05 | 0.45 | 9:1 | / | / | / | 6.5 | 46.38 | 2.0 | 8.5 |

| | | | | | | | | | | | |
|---|---|---|---|---|---|---|---|---|---|---|---|
| Note: "/" in Table 1 means that a corresponding preparation parameter, substance, or performance parameter does not exist. | | | | | | | | | | | |

**Table 2**

| | Negative electrode material | Button half cell | | | | Lithium-ion battery | | | |
|---|---|---|---|---|---|---|---|---|---|
| | | First-cycle discharge specific capacity (mAh/g) | First-cycle charge specific capacity (mAh/g) | First-cycle charge/discharge efficiency (%) | Test for first-cycle swelling rate under full lithiation (%) | Room-temperature cycling swelling rate (%) | Room-temperature cycling performance (cycles) | High-temperature cycling swelling rate (%) | High-temperature cycling performance (cycles) |
| Example 2-1 | Example 1-1 | 1813.1 | 1614.5 | 89.1 | 16 | 9.6 | 603 | 11.4 | 553 |
| Example 2-2 | Example 1-2 | 1885.6 | 1672.5 | 88.7 | 17 | 10.3 | 501 | 12.1 | 457 |
| Example 2-3 | Example 1-3 | 1700.3 | 1523.5 | 89.6 | 15 | 9.4 | 556 | 11.3 | 518 |
| Example 2-4 | Example 1-4 | 1887.1 | 1660.6 | 88.0 | 20 | 10.4 | 549 | 12.3 | 511 |
| Example 2-5 | Example 1-5 | 1702.6 | 1534.7 | 90.1 | 13 | 9.3 | 579 | 11.2 | 525 |
| Example 2-6 | Example 1-6 | 1811.1 | 1610.1 | 88.9 | 16 | 9.6 | 599 | 11.5 | 547 |
| Example 2-7 | Example 1-7 | 1806.5 | 1625.8 | 90.0 | 16 | 9.6 | 600 | 11.4 | 551 |
| Example 2-8 | Example 1-8 | 1808.7 | 1622.4 | 89.7 | 17 | 19.7 | 601 | 11.5 | 556 |
| Example 2-9 | Example 1-9 | 1804.6 | 1620.5 | 89.8 | 16 | 9.6 | 605 | 11.3 | 561 |
| Example 2-10 | Example 1-10 | 1853.3 | 1640.1 | 88.5 | 18 | 9.8 | 571 | 11.7 | 522 |
| Example 2-11 | Example 1-11 | 1772.3 | 1595.4 | 90.0 | 16 | 9.6 | 596 | 11.4 | 547 |
| Example 2-12 | Example 1-12 | 1815.7 | 1646.9 | 90.7 | 20 | 10.2 | 525 | 11.9 | 479 |
| Example 2-13 | Example 1-13 | 1817.0 | 1617.1 | 89.0 | 16 | 9.7 | 598 | 11.5 | 545 |
| Example 2-14 | Example 1-14 | 1812.9 | 1615.3 | 89.1 | 17 | 9.8 | 591 | 11.6 | 542 |
| Example 2-15 | Example 1-15 | 1816.2 | 1610.9 | 88.7 | 16 | 9.7 | 589 | 11.4 | 537 |
| Example 2-16 | Example 1-16 | 1817.6 | 1615.8 | 88.9 | 17 | 9.7 | 594 | 11.5 | 543 |
| Example 2-17 | Example 1-17 | 1838.4 | 1637.8 | 89.1 | 17 | 9.6 | 601 | 11.4 | 549 |
| Comparative example 4 | Comparative example 1 | 2084.6 | 1798.2 | 86.3 | 29 | 10.6 | 385 | 13.0 | 376 |
| Comparative example 5 | Comparative example 2 | 1905.6 | 1657.9 | 87.0 | 22 | 10.5 | 485 | 12.5 | 441 |
| Comparative example 6 | Comparative example 3 | 1907.9 | 1652.6 | 86.6 | 28 | 10.8 | 427 | 13.0 | 396 |

From Examples 1-1 to 1-17, Examples 2-1 to 2-17, and Comparative examples 1 to 6, it can be learned that when the negative electrode material has the three coating layers described in this application, the negative electrode material exhibits a lower resistivity, a higher silicon amount, higher first-cycle charge/discharge efficiency, and lower first-cycle swelling rate under full lithiation; and more cycles and a lower swelling rate of the resulting lithium-ion battery can be achieved at a room temperature and high temperature, indicating improvement in the cycling performance and reduction in the swelling rate of the lithium-ion battery.

From FIG. 2 to FIG. 5 of the specification, it can be learned that applying the negative electrode material in Example 1-1 to the lithium-ion battery results in a higher cycle capacity retention rate and a lower swelling rate of the lithium-ion battery after 300 cycles at a room temperature, compared with those in the comparative examples; and at a high temperature, the lithium-ion battery has a higher cycle capacity retention rate after 100 cycles and a lower swelling rate after 200 cycles, compared with those in the comparative examples. Thus, the lithium-ion battery prepared in Example 2-1 exhibits better cycling performance and swelling resistance than those in Comparative examples 4 to 6.

From Examples 1-1 to 1-17 and Examples 2-1 to 2-17, it can be learned that when the silicon amount of the negative electrode material is 40% to 50%, Dᵥ50 is 6 µm to 10 µm, Dᵥ90 is less than or equal to 30 µm, the mass percentage of the carbon in the first layer is 1% to 5%, the mass percentage of organic lithium salt is 0.9% to 9%, the mass percentage of polyurethane is 0.9% to 9%, and/or the type mass percentage of the second conductive material is 0.1% to 1%, the negative electrode material exhibits a lower resistivity, a higher silicon amount, higher first-cycle charge/discharge efficiency, and lower first-cycle swelling rate under full lithiation; and more cycles and a lower swelling rate of the resulting lithium-ion battery can be achieved at a room temperature and high temperature, indicating improvement in the cycling performance and reduction in the swelling rate of the lithium-ion battery.

**Table 3**

| Group | Mass percentage of DFEC (%) | Mass percentage of FEC (%) | Room-temperature cycling performance (cycles) | High-temperature cycling performance (cycles) |
|---|---|---|---|---|
| Example 1-1 | / | / | 603 | 553 |
| Example 3-1 | 0.5% | / | 611 | 559 |
| Example 3-2 | 2.0% | / | 623 | 571 |
| Example 3-3 | 5.0% | / | 650 | 595 |
| Example 3-4 | 7.0% | / | 639 | 585 |
| Example 3-5 | 10.0% | / | 627 | 565 |
| Example 3-6 | 12.0% | / | 600 | 546 |
| Example 3-7 | / | 0.5% | 609 | 556 |
| Example 3-8 | / | 2.0% | 620 | 563 |
| Example 3-9 | / | 5.0% | 643 | 587 |
| Example 3-10 | / | 7.0% | 635 | 576 |
| Example 3-11 | / | 10.0% | 623 | 560 |
| Example 3-12 | / | 12.0% | 597 | 542 |
| Example 3-13 | 5.0% | 5.0% | 624 | 562 |
| Example 3-14 | 2.0% | 7.0% | 623 | 561 |
| Example 3-15 | 7.0% | 2.0% | 625 | 564 |

| | | | | |
|---|---|---|---|---|
| Note: "/" in Table 3 means that a corresponding preparation parameter, substance, or performance parameter does not exist. | | | | |

A type mass percentage of an additive in the electrolyte usually affects the cycling performance of the lithium-ion battery. From Example 1-1 and Examples 3-1 to 3-15, it can be learned that when the additive with a mass percentage of 0.5% to 10% is added to the electrolyte, the lithium-ion battery prepared with the negative electrode material provided in this application exhibits good room-temperature and high-temperature cycling performance.

## Claims

1. A negative electrode material, comprising:
a core, wherein the core comprises silicon-based particles;
a first layer, wherein the first layer is disposed on an outer side of the core;
a second layer, wherein the second layer is disposed on an outer side of the first layer; and
a third layer, wherein the third layer is disposed on an outer side of the second layer;
wherein the first layer contains carbon; the second layer contains a first conductive material and an organic lithium salt; and the third layer contains a second conductive material and a polymer.

2. The negative electrode material according to claim 1, wherein the silicon-based particles comprise at least one of silicon-carbon particles or silicon-oxide particles; the organic lithium salt comprises a lithium polyacrylate salt; the polymer comprises polyurethane; the first conductive material and the second conductive material are each independently selected from at least one of single-walled carbon nanotubes, multi-walled carbon nanotubes, or conductive carbon black.

3. The negative electrode material according to claim 2, wherein the lithium polyacrylate salt comprises at least one of lithium polyacrylate or lithium poly(acrylamide-co-acrylic acid).

4. The negative electrode material according to any one of claims 1 to 3, wherein based on a mass of the negative electrode material, a mass percentage of silicon element is 40% to 50%.

5. The negative electrode material according to any one of claims 1 to 4, wherein, based on a mass of the negative electrode material, a mass percentage of the organic lithium salt is 0.9% to 9%.

6. The negative electrode material according to any one of claims 1 to 5, wherein, based on a mass of the negative electrode material, a mass percentage of the polymer is 0.9% to 9%.

7. The negative electrode material according to any one of claims 1 to 6, wherein, based on a mass of the negative electrode material, a mass percentage of the first conductive material is 0.1% to 1%.

8. The negative electrode material according to any one of claims 1 to 7, wherein, based on a mass of the negative electrode material, a mass percentage of the second conductive material is 0.1% to 1%.

9. The negative electrode material according to any one of claims 1 to 8, wherein the negative electrode material satisfies at least one of the following:
(1) Dᵥ50 of the negative electrode material is 6 µm to 10 µm;
(2) Dᵥ90 of the negative electrode material is less than or equal to 30 µm; or
(3) based on a mass of the negative electrode material, a mass percentage of the carbon in the first layer is 1% to 5%.

10. The negative electrode material according to any one of claims 1 to 9, wherein, based on a mass of the negative electrode material, a mass ratio of the first conductive material to the organic lithium salt is 1:9 to 2:9, and a mass ratio of the second conductive material to the polymer is 1:9 to 2:9.

11. A method for preparing the negative electrode material according to any one of claims 1 to 10, the method comprising:
providing the silicon-based particles;
performing carbon-coating on the silicon-based particles, to obtain a first intermediate;
dispersing the first intermediate in water, to obtain a first dispersion; dispersing an organic lithium salt and a first conductive material in water, to obtain a second dispersion; mixing and stirring the first dispersion and the second dispersion to uniformity, to obtain a second intermediate through spray drying; and
dispersing the second intermediate in water to obtain a third dispersion; dispersing a polymer and a second conductive material in water, to obtain a fourth dispersion; and mixing and stirring the third dispersion and the fourth dispersion to uniformity, to obtain the negative electrode material through spray drying.

12. The method according to claim 11, wherein the carbon-coating includes placing the silicon-based particles in a fluidized bed, and introducing a carbon source gas at a temperature of 500°C to 650°C for reaction for 2 h to 3 h, to obtain the first intermediate; wherein the carbon source gas comprises at least one of acetylene, methane, or propene.

13. An electrochemical apparatus, comprising a positive electrode plate, a separator, an electrolyte, and a negative electrode plate; the negative electrode plate comprising a negative electrode active material layer; wherein the negative electrode active material layer comprises the negative electrode material according to any one of claims 1 to 10.

14. The electrochemical apparatus according to claim 13, wherein the electrolyte comprises an additive, wherein the additive comprises at least one of difluoroethylene carbonate or fluoroethylene carbonate, and based on a mass of the electrolyte, a mass percentage of the additive is 0.5% to 10%.

15. The electrochemical apparatus according to claim 14, wherein based on the mass of the electrolyte, the mass percentage of the additive is 2% to 7%.
